# EUROPÄISCHE PATENTSCHRIFT

(11) **EP 1 425 531 B1**
(45) Veröffentlichungstag und Bekanntmachung des Hinweises auf die Patenterteilung: **28.02.2007**
(21) Anmeldenummer: 02800056.0
(22) Anmeldetag: 15.07.2002
(51) Int. Cl.: F16L 9/00, F16L 9/22, E04F 17/02

(54) **GASDICHTER KANAL**
GAS-PROOF CONDUIT
CONDUIT ETANCHE AUX GAZ

(30) Priorität: 08.09.2001 DE 10144196
(43) Veröffentlichungstag der Anmeldung: 09.06.2004
(73) Patentinhaber: EISENMANN Anlagenbau GmbH & Co. KG, 71032 Böblingen (DE)
(72) Erfinder: KIMMERLE, Walter, 71088 Holzgerlingen (DE)
(74) Vertreter: Ostertag, Ulrich
(86) Internationale Anmeldenummer: PCT/EP2002/007827
(87) Internationale Veröffentlichungsnummer: WO 2003/029711

(56) Entgegenhaltungen:
- EP-A- 0 160 890
- EP-A- 0 516 945
- DE-A- 10 017 567
- DE-U- 1 942 276
- US-A- 2 916 054

## Beschreibung

Die Erfindung betrifft einen gasdichten Kanal, insbesondere zum Abführen von mit Verunreinigungen beladener Abluft aus industriellen Prozessen, insbesondere aus Lackieranlagen, mit Begrenzungswänden, die ringsum von im wesentlichen ebenen Kanalelementen zusammengesetzt sind, welche ringsum an ihren Rändern eine senkrecht zu ihrer Hauptfläche gerichtete, radial nach außen weisende, einen Verbindungsflansch bildende Abkantung aufweisen.

Bei Kanälen dieser Art stellt sich ein komplexes Anforderungsprofil: Da sie in fertigmontiertem Zustand erhebliche Abmessungen aufweisen können, sollten sie aus handhabbaren Untereinheiten zusammengesetzt sein, die leicht zu transportieren sind und während des Transports wenig Platz einnehmen. Zum anderen muß jedoch auf absolute Dichtigkeit geachtet werden. Diese absolute Dichtigkeit wird insbesondere dort relevant, wo der Kanal horizontal geführt ist und sich auf der Bodenfläche des Kanales Verunreinigungen, zum Beispiel auch in flüssiger Form, abscheiden können.

Ein Kanal ähnlich der eingangs genannten Art ist in der EP 0278294 B1 beschrieben. Hier wird versucht, dem oben geschilderten Anforderungsprofil dadurch gerecht zu werden, daß der Kanal aus Einzelelementen zusammengesetzt ist, welche durch Abkantungen gebildete Verbindungsflansche aufweisen. Um den Dichtigkeitsanforderungen im unten liegenden Bereich des Kanales zu entsprechen, werden hier Winkelstücke eingesetzt, die einstückig über Eck geführte Wandbereiche aufweisen und so eine Art Wanne bilden. Nur in weiter oben liegenden Bereichen der Begrenzungswände dieses Kanales bzw. zwischen derartigen Winkelstücken werden auch ebene Kanalelemente eingesetzt.

Nachteilig bei diesem bekannten Kanal ist, daß mit den Winkelstücken nach wie vor Elemente eingesetzt werden, die in der Herstellung verhältnismäßig teuer und aufgrund ihres Platzbedarfes verhältnismäßig schwierig zu transportieren und zu lagern sind. Außerdem müssen für die Montage des Kanales vor Ort immer unterschiedliche Bauelemente bereitgehalten werden.

Einen Luftkanal der eingangs erwähnten Art zeigt die EP 0 160 890 A2 in einem Ausführungsbeispiel der dem Oberbegriff des Anspruchs 1 entspricht. Die einzelnen Kanalelemente sind dort aus Kunststoff hergestellt. Die Verbindung der Kanalelemente untereinander erfolgt über Verschraubungen an den Verbindungsflanschen. Die Herstellung der recht großen Kunststoff-Kanalelemente ist jedoch aufwändig; ihre mechanische und thermische Stabilität ist begrenzt.

Aus der US 2 916 054 geht ein Lüftungskanal mit ebenen metallischen Kanalplatten hervor, die an ihren Kanten mehrfach nach innen bzw. nach außen gebogen sind und dadurch eine Art Nut-und-Feder-Verbindung ihrer Längskanten ermöglichen, wobei zusätzliche Rastelemente ein unbeabsichtigtes Trennen verhindern. Gasdichtheit ist dort nicht angesprochen oder verwirklicht. Das Aneinanderfügen einzelner Kanalabschnitte sowie die Vergrößerung des Kanalquerschnitts wird durch Verwendung spezieller Adapterteile ermöglicht.

Aufgabe der vorliegenden Erfindung ist es, einen Kanal der eingangs genannten Art so weiterzubilden, daß er in der Herstellung seiner Einzelelemente ebenso wie in seiner Montage preiswerter ist.

Diese Aufgabe wird erfindungsgemäß dadurch gelöst, daß die Begrenzungswände des Kanals aus Metallblech hergestellt sind, sich an die erste flanschbildende Abkantung der flachen Kanalelemente unter rechtem Winkel eine zweite Abkantung anschließt, und zumindest teilweise an den Stoßstellen, an denen benachbarte Kanalelemente stumpf miteinander verbunden sind, eine Schicht aus einem dichtenden, elastisch abbindenden Klebstoff vorgesehen ist.

Mit der vorliegenden Erfindung wird die im Stande der Technik vorgezeichnete Meinung überwunden, eine ausreichende, auf Dauer beständige Dichtigkeit im insbesondere unten liegenden Bereich des Kanales ließe sich nur unter Verwendung von einstückigen Winkelstücken erzielen. Bei einem erfindungsgemäßen Kanal werden ausschließlich ebene Kanalelemente eingesetzt, wobei sich der Begriff "eben" auf die Hauptfläche dieser Kanalelemente bezieht und die verschiedenen Abkantungen an den Rändern der Kanalelemente, die bei fertig montiertem Kanal nach außen zeigen, außer Betracht läßt. Derartige ebene Kanalelemente lassen sich in großen Stückzahlen preiswert vorfabrizieren; sie können mit geringem Raumbedarf transportiert oder gelagert werden.

Die erforderliche Dichtigkeit an den Stoßstellen der Kanalelemente wird erfindungsgemäß durch eine besondere Substanz gewährleistet, welche insoweit die Winkelstücke des Standes der Technik ersetzt. Diese Substanz weist eine Doppeleigenschaft auf: Zum einen hat sie klebende Wirkung, verbindet sich also innig mit dem Material der Kanalelemente, die sie miteinander verbinden soll. Hierdurch ist auf Dauer gewährleistet, daß sich die entsprechende Schicht von den Kanalelementen nicht ablösen kann. Die zweite Funktion, welche diese Substanz erfüllen muß, ist selbstverständlich diejenige der Dichtung, welche ein Austreten von Gasen und/oder Flüssigkeiten aus dem Innenraum des Kanales unterbindet. Die Substanz muß zudem dauerhaft elastisch bleiben, so daß sie im Betrieb des Kanales nicht versprödet oder gar zerbröckelt.

Selbstverständlich ist, daß die Substanz gegenüber den Verunreinigungen, welche die durch den Kanal strömende Abluft mit sich führt, beständig sein muß.

Als Klebstoff eignet sich beispielsweise ein auf Polysulfiden basierendes Material oder auch ein auf Silan-modifizierten Polymeren basierendes Material. Beide Stoffe weisen nicht nur die gewünschten klebenden, dichtenden und elastischen Eigenschaften auf; sie sind insbesondere auch gegenüber denjenigen Verunreinigungen beständig, welche aus Lackieranlagen kommende Abluft mit sich führt: Lösemittel, Salze, Koaguliermittel, Lackreste.

An die erste flanschbildende Abkantung der flachen Kanalelemente Schließt sich unter rechtem Winkel eine zweite, versteifende Abkantung an. Hierdurch wird jedes Kanalelement in sich steifer, so daß größer Entfernungen freitragend überbrückt werden können und Schwingungen reduziert werden.

Diese Wirkung der zweiten Abkantung läßt sich durch eine dritte Abkantung noch verstärken, die sich unter rechtem Winkel an die zweite Abkantung anschließt und zur Hauptfläche des Kanalelementes zeigt.

Zweckmäßigerweise sollten die Kanalelemente an den Stoßstellen zu den benachbarten Kanalelementen zusätzlich verschraubt sein. Hierdurch werden die Klebestellen mechanisch entlastet; außerdem ist auf diese Weise eine Vormontage des Kanales möglich, solange der Klebstoff noch nicht abgebunden hat.

Bei Kanälen, welche verhältnismäßig große horizontal verlaufende Begrenzungswände aufweisen, empfiehlt sich, mindestens eine Stützstrebe vorzusehen, welche sich von einer Begrenzungswand bis zu der gegenüberliegenden, parallel hierzu laufenden Begrenzungswand erstreckt. Diese Stützstrebe verhindert ein Durchbiegen der Begrenzungswand des Kanals und wirkt ebenfalls Schwingungen entgegen.

In einem Ende der Stützstrebe kann eine erste Mutter befestigt sein, die auf den Gewindeschaft einer in der einen Begrenzungswand festgelegten Schraube aufdrehbar ist. Bei der Montage des Kanals läßt sich durch Verdrehen der Stützstrebe selbst die Verbindung mit der einen Begrenzungswand, im allgemeinen der unteren Begrenzungswand, herstellen.

Die Verbindung des anderen Endes der Stützstrebe mit der entsprechenden Begrenzungswand läßt sich dann aber nicht auf dieselbe Weise realisieren. Hierfür empfiehlt sich vielmehr, wenn im anderen Ende der Stützstrebe eine zweite Mutter befestigt ist, in welche eine die gegenüberliegende Begrenzungswand durchtretende Schraube eingedreht ist.

Der Montageablauf ist also wie folgt: Die Stützstrebe wird durch Verdrehen an der unteren Begrenzungswand befestigt und steht zunächst frei. Danach wird die obere Begrenzungswand aufgelegt und mit Hilfe der diese obere Begrenzungswand durchtretende Schraube fixiert.

Der Unterbindung von Schwingungen dient auch diejenige Ausführungsform der Erfindung, bei welcher auf der Außenseite der Hauptfläche mindestens eines Kanalelementes mindestens eine Versteifungsstrebe befestigt ist.

Diese Versteifungsstrebe ist zweckmäßigerweise ein Hohlprofil, wodurch das Gewicht reduziert wird.

Vorteilhaft ist weiter, wenn die Versteifungsstrebe aufgeklebt ist. Die Versteifungsstrebe läßt sich so an beliebigen Stellen der Hauptfläche des Kanalelementes festlegen, ohne daß das Kanalelement durchbohrt werden müßte, was zusätzliche Abdichtungsmaßnahmen erfordern würde.

Dabei wird wiederum bevorzugt, wenn die Versteifungsstrebe ein Dreiecksprofil aufweist, wobei die an der Hauptfläche des Kanalelements angeklebte Seite von zwei Schenkeln gebildet ist, die unter spitzem Winkel zur Hauptfläche verlaufen. Zwischen den Schenkeln der Versteifungsstrebe und der Hauptfläche des Kanalelementes bilden sich auf diese Weise zwei keilförmige Zwischenräume, welche den Klebstoff aufnehmen. Dieser tritt daher beim Klebevorgang nicht nach außen über, was das optische Erscheinungsbild des fertiggestellten Kanales beeinträchtigen würde.

Ein Ausführungsbeispiel der Erfindung wird nachfolgend anhand der Zeichnung näher erläutert; es zeigen
- Figur 1: perspektivisch einen aus zwei Modulen zusammengesetzten Abschnitt eines gasdichten Luftkanals;
- Figur 2: die Draufsicht auf ein ebenes Kanalelement, wie es in dem Luftkanal von Figur 1 verwendet wird;
- Figur 3: eine Detailvergrößerung aus Figur 2 im Bereich des dort eingezeichneten Kreises "Z";
- Figur 4: einen Schnitt durch das Kanalelement der Figur 2 gemäß der dortigen Linie IV-IV;
- Figur 5: eine Detailvergrößerung aus Figur 4 im Bereich des dortigen Kreises "X";
- Figur 6: einen Schnitt durch das Kanalelement von Figur 2 gemäß der dortigen Linie VI-VI;
- Figur 7: perspektivisch einen Ausschnitt des Kanalelements der Figur 2, gesehen in Richtung der dort eingezeichneten Pfeile VI-VI;
- Figur 8: eine Detailvergrößerung aus Figur 6 im Bereich des dortigen Kreises "Y";
- Figur 9: in vergrößertem Maßstab die Stoßstelle zwischen zwei senkrecht zueinander verlaufenden Kanalelementen;
- Figur 10: die Stoßstelle zwischen zwei in der gleichen Ebene liegenden Kanalelementen;
- Figur 11: die Art der Anbringung eines Versteifungselements an einem Kanalelement im Bereich von dessen seitlicher Abkantung;
- Figur 12: die Art der Befestigung des oberen Endes einer Stützstrebe, die bei dem Kanalabschnitt von Figur 1 Verwendung findet;
- Figur 13: die Art der Befestigung des unteren Endes der Befestigungsstrebe;
- Figur 14: die Art der Anbringung einer im Querschnitt dreieckigen Versteifungsstrebe an dem Kanalelement.

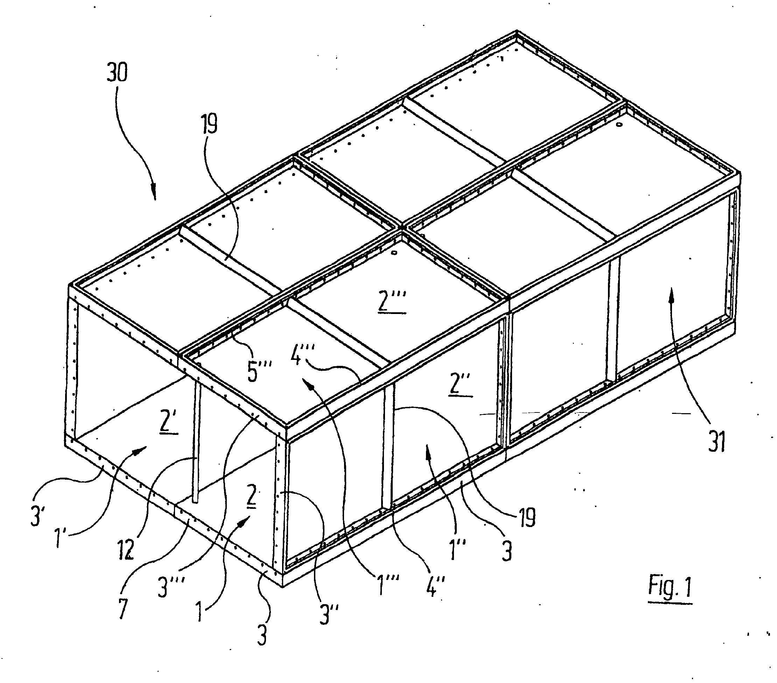

In Figur 1 ist perspektivisch ein Abschnitt eines Luftkanals dargestellt, durch dessen Innenraum die aus einer Lackieranlage abgeführte Luft strömt. Diese Luft ist mit Lösemitteln, Salzen, Koaguliermitteln und Lackresten beladen und wird, ggf. über eine Reiningungsanlage, der Außenatmosphäre zugeführt. Der Kanalabschnitt verläuft jedenfalls im dargestellten Bereich horizontal, so daß sich auf der unteren Bodenfläche die von der Luft mitgeführten Substanzen sammeln können, deren Austritt aus dem Kanalabschnitt jedoch verhindert werden muß.

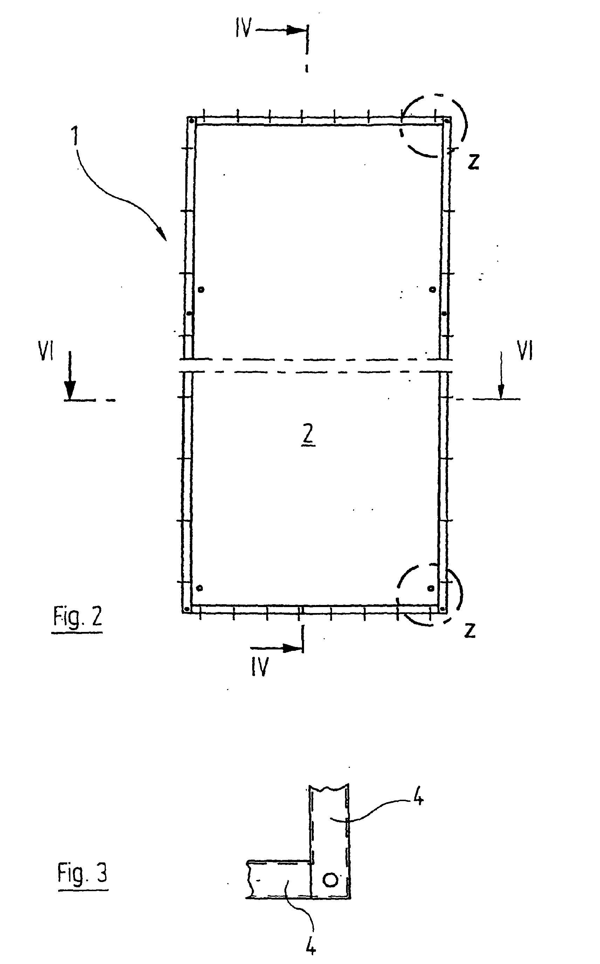

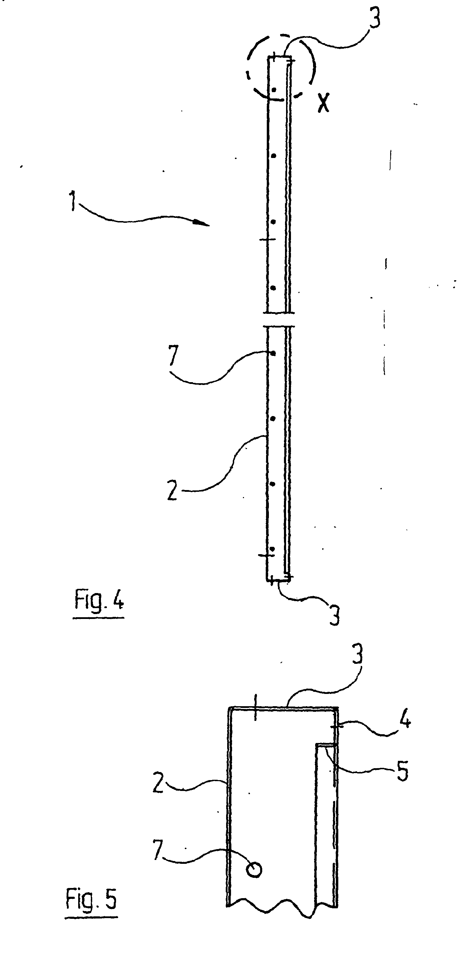

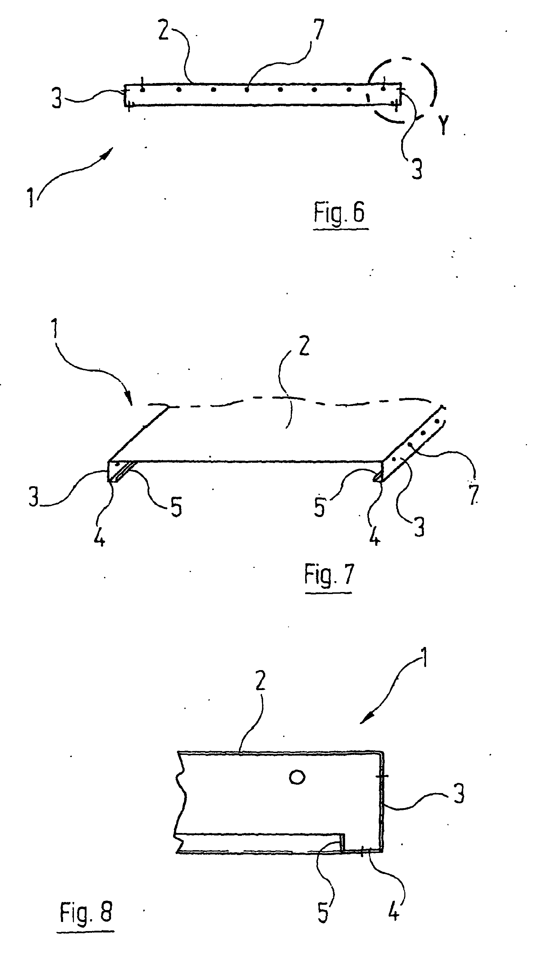

Der dargestellte Luftkanal ist aus einzelnen Kanalelementen 1, 1', 1", 1"' zusammengesetzt, die bis auf Bohrungen, die unten weiter beschrieben sind, untereinander identisch und im wesentlichen eben sind. Die genaue Bauweise eines solchen Kanalelements 1 ist den Figuren 2 bis 8 zu entnehmen. Jedes dieser Kanalelemente 1 besteht im wesentlichen aus einem rechteckigen, ebenen Blech, das an allen vier Rändern seiner Hauptfläche 2 eine Mehrfachabkantung aufweist. Die Form dieser Mehrfachabkantung ist insbesondere den Figuren 5 und 8 zu entnehmen. An die rechtekkige Hauptfläche 2 des Kanalelements 1 schließt sich zunächst unter rechtem Winkel eine erste, verhältnismäßig lange Abkantung 3 an, von der eine zweite, ebenfalls im rechten Winkel geführte Abkantung 4 parallel zur Hauptfläche 2 wieder zurückführt. Auf die zweite Abkantung 4 folgt, erneut unter rechtem Winkel, eine dritte Abkantung 5, die über eine verhältnismäßig kurze Entfernung parallel zur ersten Abkantung 3 in Richtung auf die Hauptfläche 2 des Kanalelements 1 zeigt.

Wie die Figuren 2 und 3 zeigen, laufen die zweite Abkantung 4 und die dritte Abkantung 5 an den längeren Rechteckseiten über die gesamte Längsabmessung des Kanalelements 1 hinweg durch, während an den kürzeren Rechteckseiten die zweite Abkantung 4 und die dritte Abkantung 5 entsprechend ausgeklinkt sind, so daß sich die in den Figuren 2 und 3 dargestellte Konfiguration ergibt.

Durch die ersten Abkantungen 3 ist an denjenigenen Rändern des Kanalelements 1, wo dies aus unten erläuterten Gründen erforderlich ist, eine Vielzahl von in regelmäßigen Abständen angeordneten Bohrungen 7 hindurchgeführt. Dies ist insbesondere den Figuren 6 und 7 zu entnehmen. Die Bohrungen 7 sind zudem in Figur 2, in der sie nicht direkt erkennbar sind, durch ihre Achsen symbolisiert.

An den Stoßstellen, an denen die Abkantungen 3, 4, 5 zweier benachbarter Rechteckseiten zusammentreffen, sind die Abkantungen 3, 4, 5 miteinander verschweißt, so daß sich eine durchgehende, dichte Flanschfläche ergibt.

Die einzelnen Kanalelemente 1 werden in der in Figur 1 angedeuteten Weise zu dem eigentlichen Luftkanal zusammengesetzt, und zwar so, daß die Abkantungen 3, 4, 5 stets nach außen zeigen und die inneren Begrenzungsflächen des Luftkanals im wesentlichen glatt und eben sind. Bei dem in Figur 1 dargestellten Ausführungsbeispiel sind zwei identische Kanalmodule 30, 31 in Strömungsrichtung der Luft hintereinander geschaltet. Der gesamte Kanal besteht aus seiner Vielzahl derartiger Kanalmodule 30, 31.

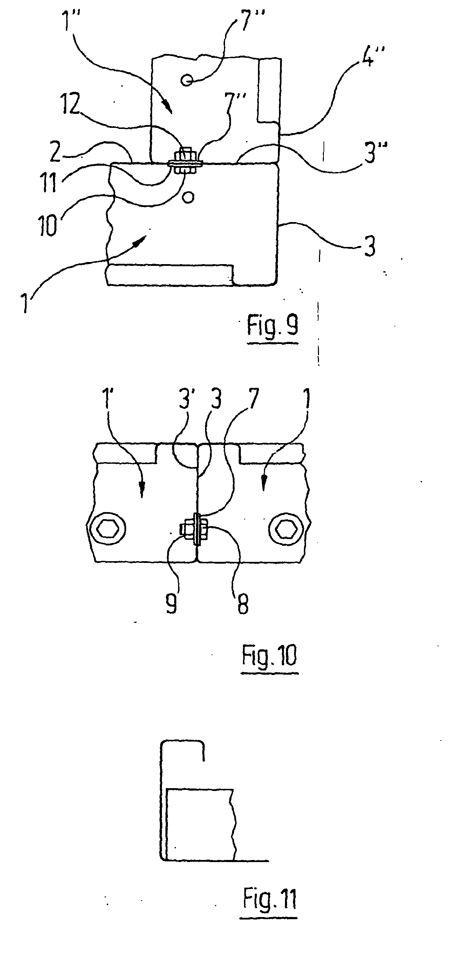

Jeder Kanalmodul 30, 31 besitzt als untere Grundfläche zwei Kanalelemente 1, 1', die mit ihren Längsseiten aneinanderstoßend nebeneinander angeordnet sind. Diese Kanalelemente 1, 1' sind an ihren aneinander anliegenden ersten Abkantungen 3, 3' mit Hilfe von Schrauben 8, die durch die Löcher 7 in den ersten Abkantungen 3 hindurchgeführt sind, und Muttern 9 verschraubt, wie dies aus Figur 10 zu entnehmen ist. Zuvor wurde in die Trennfuge zwischen den ersten Abkantungen 3, 3' der aneinander befestigten Kanalelemente 1, 1' eine Schicht aus einem dichtenden Klebstoff eingebracht, dessen Eigenschaften weiter unten erläutert werden. Nach dem Abbinden des Klebstoffs sind also die benachbarten Kanalelemente 1, 1' mechanisch nicht nur durch die Verschraubung mit Hilfe der Schrauben 8 und Muttern 9 sondern auch durch den dichtenden Klebstoff miteinander verbunden.

Die Oberseite der Kanalmodule 30, 31 ist in identischer Weise wie deren Boden aus zwei in der beschriebenen Weise miteinander verbundenen Kanalelementen 1"' zusammengesetzt.

Die Seitenwände der Kanalmodule 30, 31 werden jeweils von einem einzigen Kanalelement 1'' gebildet, das mit seinen ersten Abkantungen 3" so an die Hauptflächen 2, 2"' der den Boden bzw. die Oberseite bildenden Kanalelemente 1, 1"' angelegt ist, daß die entsprechenden zweiten Abkantungen 4" der senkrecht verlaufenden Kanalelemente 1" mit den ersten Abkantungen 3, 3"' der horizontal verlaufenden Kanalelemente 1, 1"' fluchten. Die die Seitenwände bildenden Kanalelemente 1" werden, wie dies der Figur 9 zu entnehmen ist, an den Hauptflächen 2, 2"' der entsprechenden horizontal verlaufenden Kanalelemente 1, 1"' angeschraubt. Hierzu werden Schrauben 10 durch entsprechende Löcher 11 in den Hauptflächen 2, 2"' und die bereits erwähnten Löcher 7' in der ersten Abkantung 3' des senkrecht stehenden Kanalelements 1' hindurchgeführt und mit Muttern 12 gesichert.

Die lichte Breite der Kanalmodule 30, 31 ist also etwas geringer als die Summe der Breiten zweiter Kanalelemente 1, 1'.

Auch in die Fugen zwischen der ersten Abkantung 3" des senkrechten, die Seitenwand bildenden Kanalelements 1'' und die benachbarten Hauptflächen 2, 2"' der horizontal verlaufenden Kanalelemente 1, 1"' wird eine Schicht des oben schon erwähnten dichtenden Klebstoffs eingebracht.

Unter einem "dichtenden Klebstoff" wird hier eine Substanz verstanden, die primär klebende Eigenschaften hat, also mechanisch fest an dem Material haftet, das die miteinander zu verbindenden Flächenbereiche aneinanderstoßender Kanalelemente 1, 1', 1", bildet, darüberhinaus selbstverständlich auch dichtet. Eine dritte wichtige Eigenschaft ist eine dauerhafte Elastizität dieses Materials, so daß insbesondere Schwingungen der Gesamtstruktur keinen schädlichen Einfluß haben können. Die vierte für den dichtenden Klebstoff geforderte Eigenschaft ist eine Beständigkeit gegen die bereits oben erwähnten Verunreinigungen, mit welchen die den Kanal passierende Luft beladen ist, insbesondere also gegen die oben erwähnten Lösemittel, Salze, Koaguliermittel und Lackreste.

Als geeignet haben sich insbesondere Substanzen herausgestellt, die auf Silan-modifizierten Polymeren oder auf Polysulfiden basieren.

Sind die innerhalb der Kanalmodule 30, 31 von den Kanalelementen 1, 1', 1", 1"' frei überspannten Flächen verhältnismäßig klein, benötigen die Kanalelemente 1 keine zusätzliche Versteifung. Bei dem in Figur 1 dargestellten Ausführungsbeispiel jedoch, wo die Flächen sowohl der einzelnen Kanalelemente 1, 1', 1", 1"' als auch insbesondere die Boden- und die Oberseite, die aus zwei Kanalelementen 1, 1' zusammengesetzt ist, verhältnismäßig groß sind, sind zwei zusätzliche Maßnahmen vorgesehen:

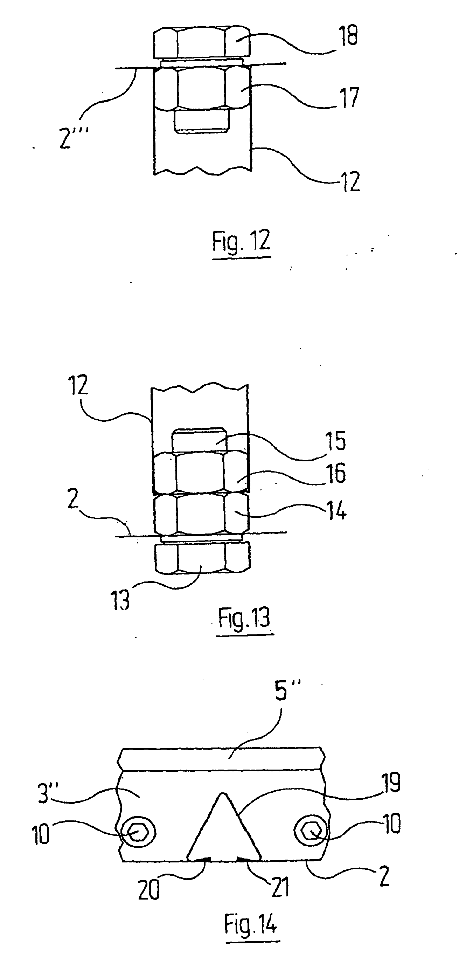

Zum einen sind als Distanzierungseinrichtung zwischen dem Boden und der Oberseite pro Kanal zwei Stützstreben 12 vorgesehen, von denen in Figur 1 nur eine erkennbar ist. Die Art der Befestigung einer derartigen Stützstrebe 12 an einem (1) der beiden den Boden des Kanalmoduls 30 bildenden Kanalelemente 1, 1' ist in Figur 13 dargestellt. Eine Schraube 13 ist unter Beifügung einer nicht mit Bezugszeichen versehenen Dichtscheibe durch eine Bohrung in der Hauptfläche 2 des Kanalelements 1 hindurchgeführt und mit einer Kontermutter 14 gesichert. Der Gewindeschaft 15 der Schraube 13 steht dabei nach oben über die Kontermutter 14 über. Die Stützstrebe 12 ist hohl und nach unten offen. An ihrem unteren Ende ist eine Mutter 16 eingeschweißt. Die Stützstrebe 12 kann auf der am Kanalelement 1 vormontierten Einheit, die aus der Schraube 13 und der Kontermutter 14 besteht, nunmehr dadurch befestigt werden, daß die in ihr enthaltene Mutter 16 auf den Gewindeschaft 15 der Schraube 13 durch Drehen der Stützstrebe 12 aufgedreht wird, bis die Unterseite der Mutter 16 an der Oberseite der Kontermutter 14 anliegt.

Wie Figur 12 zeigt, ist auch das obere Ende der Stützstrebe 12 offen; auch hier ist eine Mutter 17 eingeschweißt. Das obere Ende der Stützstrebe 12 wird mittels einer weiteren Schraube 18 befestigt, die unter Beifügung einer nicht mit Bezugszeichen versehenen Dichtscheibe durch die Hauptfläche 2"' des einen Teil der Oberseite bildenden Kanalelements 1"' hindurchgeführt und in die Mutter 17 eingedreht ist.

Um Schwingungen innerhalb der Hauptfläche 2, 2', 2", 2"' der einzelnen Kanalelemente 1, 1', 1" , 1"' zu vermeiden, ist auf diese in der Mitte zwischen den beiden kurzen Begrenzungsseiten jeweils eine Verstärkungsstrebe 19 aufgeklebt. Diese Verstärkungsstrebe 19 ist als dreieckiges Hohlprofil gestaltet, wobei die an der jeweiligen Hauptfläche 2, 2', 2", 2"' anliegende Dreiecksseite nicht durchläuft sondern nur zwei verhältnismäßig kurze Schenkel umfaßt, die mit der Hauptfläche 2, 2', 2", 2"' des Kanalelements 1,1', 1", 1"' einen spitzen Winkel einschließen. Hierdurch entstehen zwei keilförmige Räume 20, 21, die mit Klebstoff ausgefüllt werden können.

Es versteht sich, daß an allen Stellen, wo eine Begrenzungsfläche des Luftkanals durchstoßen wird, beispielsweise um eine Verschraubung durchzuführen, für eine entsprechende Abdichtung gesorgt ist.

## Patentansprüche

1. Gasdichter Kanal, insbesondere zum Abführen von mit Verunreinigungen beladener Abluft aus industriellen Prozessen, insbesondere aus Lackieranlagen, mit Begrenzungswänden, die ringsum von im wesentlichen ebenen Kanalelementen zusammengesetzt sind, welche ringsum an ihren Rändern eine senkrecht zu ihrer Hauptfläche gerichtete, radial nach außen weisende, einen Verbindungsflansch bildende Abkantung aufweisen,
**dadurch gekennzeichnet, daß**
die Begrenzungswände des Kanals (30, 31) aus Metallblech hergestellt sind,
sich an die erste flanschbildende Abkantung (3, 3', 3", 3"') der flachen Kanalelemente (1, 1', 1", 1"') unter rechtem Winkel eine zweite versteifende Abkantung (4, 4', 4", 4"') anschließt,
zumindest teilweise an den Stoßstellen, an denen benachbarte Kanalelemente (1, 1', 1", 1"') stumpf miteinander verbunden sind, eine Schicht aus einem dichtenden, elastisch abbindenden Klebstoff vorgesehen ist.

2. Kanal nach Anspruch 1, **dadurch gekennzeichnet, daß** der dichtende Klebstoff ein auf Polysulfiden basierendes Material ist.

3. Kanal nach Anspruch 1, **dadurch gekennzeichnet, daß** der dichtende Klebstoff ein auf Silan-modifizierten Polymeren basierendes Material ist.

4. Kanal nach Anspruch 1, **dadurch gekennzeichnet, daß** sich an die zweite Abkantung (4, 4', 4", 4"') unter rechtem Winkel eine dritte, zurück zur Hauptfläche (2, 2', 2", 2"') des Kanalelements (1, 1', 1", 1"') weisende Abkantung (5, 5', 5", 5"') anschließt.

5. Kanal nach einem der vorhergehenden Ansprüche, **dadurch gekennzeichnet, daß** die Kanalelemente (1, 1', 1", 1"') an den Stoßstellen zu den benachbarten Kanalelementen (1, 1', 1", 1"') zusätzlich verschraubt sind.

6. Kanal nach einem der vorhergehenden Ansprüche, **dadurch gekennzeichnet, daß** mindestens eine Stützstrebe (12) vorgesehen ist, welche sich von einer Begrenzungswand bis zur gegenüberliegenden, parallel hierzu laufenden Begrenzungswand erstreckt.

7. Kanal nach Anspruch 6, **dadurch gekennzeichnet, daß** in einem Ende der Stützstrebe (12) eine erste Mutter (16) befestigt ist, die auf den Gewindeschaft (15) einer in der einen Begrenzungswand festgelegten Schraube (13) aufdrehbar ist.

8. Kanal nach Anspruch 7, **dadurch gekennzeichnet, daß** im anderen Ende der Stützstrebe (12) eine weitere Mutter (17) befestigt ist, in welche eine die gegenüberliegende Begrenzungswand durchtretende Schraube (18) eingedreht ist.

9. Kanal nach einem der vorhergehenden Ansprüche, **dadurch gekennzeichnet, daß** auf der Außenseite der Hauptfläche (2, 2', 2", 2"') mindestens eines Kanalelements (1, 1', 1", 1"') mindestens eine Versteifungsstrebe (19) befestigt ist.

10. Kanal nach Anspruch 9, **dadurch gekennzeichnet, daß** die Versteifungsstrebe (19) ein Hohlprofil ist.

11. Kanal nach Anspruch 9 oder 10, **dadurch gekennzeichnet, daß** die Versteifungsstrebe (19) aufgeklebt ist.

12. Kanal nach Anspruch 11, **dadurch gekennzeichnet, daß** die Versteifungsstrebe (19) ein Dreiecksprofil aufweist, wobei die an der Hauptfläche (2, 2', 2", 2"') des Kanalelements (1, 1', 1", 1"') angeklebte Seite von zwei Schenkeln gebildet ist, die unter spitzem Winkel zur Hauptfläche (2, 2', 2", 2"') verlaufen.

## Claims

1. Gas-proof conduit, in particular for evacuating waste air carrying contaminants from industrial processes, in particular from paint finishing lines, with delimiting walls, which are formed from substantially flat conduit elements which comprise a radially outwardly facing fold all around their edges, forming a connecting flange which is oriented perpendicularly to their main surface
**characterised in that**
the delimiting walls of the conduit (30, 31) are manufactured from sheet metal
a second reinforcing fold (4, 4', 4", 4"') is joined to the first flange-forming fold (3, 3', 3", 3"') of the flat conduit elements (1, 1', 1", 1"') at right angles,
a layer consisting of a sealing adhesive which bonds elastically is provided at least partially on the joints at which adjacent conduit elements (1, 1', 1", 1"') abut one another.

2. Conduit according to Claim 1, **characterised in that** the sealing adhesive is a material based on polysulphides.

3. Conduit according to Claim 1, **characterised in that** the sealing adhesive is a material based on silane-modified polymers.

4. Conduit according to Claim 1, **characterised in that** a third fold (5, 5', 5", 5"') facing back towards the main surface (2, 2', 2", 2"') of the conduit element (1, 1', 1", 1"') is joined to the second fold (4, 4', 4", 4"') at right angles.

5. Conduit according to one of the preceding claims, **characterised in that** the conduit elements (1, 1', 1", 1"') are additionally screwed to the adjacent conduit elements (1, 1', 1", 1"') at the joints.

6. Conduit according to one of the preceding claims, **characterised in that** at least one support brace (12) is provided which extends from one delimiting wall to the opposing delimiting wall running parallel thereto.

7. Conduit according to Claim 6, **characterised in that** in one end of the support brace (12) a first nut (16) is fastened which may be screwed onto the threaded shank (15) of a screw (13) secured in the one delimiting wall.

8. Conduit according to Claim 7, **characterised in that** a further nut (17) is fastened in the other end of the support brace (12) and into which a screw (18) penetrating the opposing delimiting wall is screwed.

9. Conduit according to one of the preceding claims, **characterised in that** at least one reinforcing brace (19) is fastened to the outer face of the main surface (2, 2', 2", 2"') of at least one conduit element (1, 1', 1", 1"').

10. Conduit according to Claim 9, **characterised in that** the reinforcing brace (19) is a hollow profile.

11. Conduit according to Claim 9 or 10, **characterised in that** the reinforcing brace (19) is bonded on.

12. Conduit according to Claim 11, **characterised in that** the reinforcing brace (19) has a triangular profile, the side bonded to the main surface (2, 2', 2", 2"') of the conduit element (1, 1', 1", 1"') being formed from two arms which extend at an acute angle to the main surface (2, 2', 2", 2"').

## Revendications

1. Conduit étanche aux gaz, particulièrement pour évacuer de l'air sortant chargé d'impuretés provenant de procédés industriels, particulièrement d'installations de peinture, avec des parois de délimitation qui sont constituées périphériquement d'éléments de conduit essentiellement plats, lesquels présentent tout autour de leurs bords une pliure formant une bride de liaison orientée radialement vers l'extérieur et dirigée verticalement par rapport à sa face principale,
**caractérisé en ce que**
les parois de délimitation du conduit (30, 31) sont fabriquées en tôle métallique,
qu'une deuxième pliure de renforcement (4, 4', 4", 4"') se raccorde en angle droit à la première pliure formant une bride (3, 3', 3", 3''') des éléments de conduit plats (1, 1', 1", 1"'),
qu'au moins partiellement aux endroits de contact ou des éléments de conduit adjacents (1, 1', 1", 1"') sont reliés bord à bord les uns aux autres, une couche d'un adhésif d'étanchéité assemblant de manière élastique est prévue.

2. Conduit selon la revendication 1, **caractérisé en ce que** l'adhésif d'étanchéité est un matériau à base de polysulfures.

3. Conduit selon la revendication 1, **caractérisé en ce que** l'adhésif d'étanchéité est un matériau à base de polymère modifié par du silane.

4. Conduit selon la revendication 1, **caractérisé en ce que** sur la deuxième pliure (4, 4', 4", 4"') se raccorde en angle droit une troisième pliure (5, 5', 5", 5"') dirigée en arrière vers la face principale (2, 2', 2", 2"') de l'élément de conduit (1, 1', 1", 1"').

5. Conduit selon l'une quelconque des revendications précédentes, **caractérisé en ce que** les éléments de conduit (1, 1', 1", 1"') sont de manière supplémentaire vissés aux endroits de contact avec les éléments de conduit (1, 1', 1", 1"') voisins.

6. Conduit selon l'une quelconque des revendications précédentes, **caractérisé en ce qu'**au moins une traverse d'appui (12) est prévue, laquelle s'étend d'une paroi de délimitation jusqu'à la paroi de délimitation opposée parallèle à celle-ci.

7. Conduit selon la revendication 6, **caractérisé en ce que** dans une extrémité de la traverse d'appui (12), est fixé un premier écrou (16), qui peut être vissé sur la tige filetée (15) d'une vis (13) fixée dans la paroi de délimitation.

8. Conduit selon la revendication 7, **caractérisé en ce que** dans l'autre extrémité de la traverse d'appui (12), est fixé un autre écrou (17), dans lequel une vis (18) traversant la paroi de délimitation opposée est vissée.

9. Conduit selon l'une quelconque des revendications précédentes, **caractérisé en ce que** sur le côté extérieur de la face principale (2, 2', 2", 2"') d'au moins un élément de conduit (1, 1', 1", 1"') est fixée au moins une traverse de renforcement (19).

10. Conduit selon la revendication 9, **caractérisé en ce que** la traverse de renforcement (19) est un profilé creux.

11. Conduit selon la revendication 9 ou 10, **caractérisé en ce que** la traverse de renforcement (19) est collée.

12. Conduit selon la revendication 11, **caractérisé en ce que** la traverse de renforcement (19) présente un profilé triangulaire, le côté collé sur la face principale (2, 2', 2", 2"') de l'élément de conduit (1, 1', 1", 1"') étant formé de deux ailes qui s'étendent en formant un angle aigu avec la face principale (2, 2', 2", 2"').
